# EUROPÄISCHE PATENTANMELDUNG

(11) **EP 0 820 077 A2**
(43) Veröffentlichungstag der Anmeldung: **21.01.1998**
(21) Anmeldenummer: 97110887.3
(22) Anmeldetag: 02.07.1997
(51) Int. Cl.: H01G 9/155

(54) **Bipolare Elektroden-Elektrolyt-Einheit**

(30) Priorität: 19.07.1996 DE 19629154
(71) Anmelder: DORNIER GmbH, D-88039 Friedrichshafen (DE)
(72) Erfinder: Kurzweil, Peter, Dr., 88090 Immenstaad (DE); Schmid, Ottmar, Dipl.-Ing., 88677 Markdorf (DE)
(74) Vertreter: Meel, Thomas

(57) **Zusammenfassung**

Die Erfindung betrifft eine bipolare Elektroden-Elektrolyt-Einheit (13) für eine elektrochemische Zelle, wobei die Elektrode eine Sperrschicht (2) sowie mindestens zwei Trägerschichten (3) und mindestens zwei Aktivschichten (1) umfaßt, und
- die Aktivschichten (1) aus einem elektroaktiven Material mit geringem Widerstand und hoher Kapazität bestehen,
- die Sperrschicht (2) elektrisch leitend und stoffundurchlässig ist und aus
   - verdichtetem und/oder imprägniertem Kohlenstoff oder
   - kunststoffgebundenem Kohlenstoff oder
   - kohlenstoffbeschichtetem Metallblech besteht,
- die sich jeweils zwischen Sperrschicht (2) und einer Aktivschicht (1) befindlichen Trägerschichten (3) eine elektrisch leitende, poröse, dreidimensionale Struktur von großer spezifischer und geometrischer Oberfläche bilden, die Kohlenstoffaserpapiere, Kohlenstoffaserfolien, Kohlenstoffasermatten, Kohlenstoffasergewebe, verdichtete Graphitflocken und Kohlenstoffasern, leitfähigen Kunststoff oder durch Pyrolyse oder Dehydratisierung organischer Stoffe erzeugten Kohlenstoff enthalten,
- Sperrschicht (2) und Trägerschicht (3) einen durch Kleben, Walzen oder Pressen erzeugten stabilen mechanischen und elektrischen Verbund bilden,
- der Elektrolyt (4) gut leitfähig ist.

## Beschreibung

Die Erfindung betrifft eine bipolare Elektroden-Elektrolyt-Einheit für elektro-chemische Zellen, wie sie in Doppelschichtkondensatoren, Brennstoffzellen, Elektrolyseuren, Gassensoren oder bifunktional betriebenen Anlagen zur Anwendung kommen.

Die bipolare Elektrode ist dadurch charakterisiert, daß ihre eine Seite als Kathode, die andere als Anode arbeitet und eine elektronisch leitende, gas- und elektrolytundurchlässige Verbindung zwischen Kathoden- und Anodenseite vorhanden ist. Beide Seiten stehen mit einem Ionenleiter (Elektrolyt) in Kontakt.

An der Phasengrenzfläche zwischen Elektronen- und Ionenleitern laufen elektrochemische Vorgänge ab, die Grenzflächenkapazitäten von einigen Farad/cm² bewirken. Durch die Art der elektrochemischen Reaktionen und weiterhin durch die große poröse Oberfläche eignet sich die beschriebene Elektrode vorteilhaft für elektrochemische Energiewandler und -speicher, bei denen auf Grund eines Stoffumsatzes hohe Ströme fließen. Der Strom durch den Elektrodenquerschnitt wird im einfachsten Fall durch das Faradaysche Gesetz und die Butler-Volmer-Gleichung beschrieben.

Die elektrochemische Energiespeicherung mit Hilfe bipolarer Elektroden wurde in **EP 0 622 815 B1** beschrieben. Um hohe Betriebsspannungen zu realisieren, wird eine beliebige Zahl bipolarer Elektroden elektrisch in Serie geschaltet und ein sogenannter Elektrodenstapel aufgebaut.

Der Erfindung liegt die Aufgabe zugrunde, eine binolare Elektroden-Elektrolyt-Einheit mit verbesserter Leitfähigkeit, Kapazität, elektrochemischer Aktivität und Integrationsfähigkeit für elektrochemische Zellen mit hoher Energie- und Leistungsdichte zu schaffen.

Diese Aufgabe wird durch die bipolare Elektroden-Elektrolyt-Einheit nach Anspruch 1 gelöst. Vorteilhafte Ausbildungen der Erfindung sind Gegenstand weiterer Ansprüche.

Die erfindungsgemäße Elektroden-Elektrolyt-Einheit umfaßt eine bipolare Elektrode mit einer Sperrschicht sowie mindestens zwei Trägerschichten und mindestens zwei Aktivschichten. Sie weist die folgenden Merkmale auf:
- die Aktivschichten bestehen aus einem elektroaktiven Material mit geringem Widerstand und hoher Kapazität,
- die Sperrschicht ist elektrisch leitend und stoffundurchlässig und besteht aus
   - verdichtetem und/oder imprägniertem Kohlenstoff oder
   - kunststoffgebundenem Kohlenstoff oder
   - kohlenstoffbeschichtetem Metallblech,
- die sich jeweils zwischen Sperrschicht und einer Aktivschicht befindlichen Trägerschichten bilden eine elektrisch leitende, poröse, dreidimensionale Struktur von großer spezifischer und geometrischer Oberfläche, die Kohlenstoffaserpapiere, Kohlenstoffaserfolien, Kohlenstoffasermatten, Kohlenstoffasergewebe, verdichtete Graphitflocken und Kohlenstoffasern, leitfähigen Kunststoff oder durch Pyrolyse oder Dehydratisierung organischer Stoffe erzeugten Kohlenstoff enthält,
- Sperrschicht und Trägerschicht bilden einen durch Kleben, Walzen oder Pressen erzeugten stabilen mechanischen und elektrischen Verbund,
- der Elektrolyt ist gut leitfähig.

Durch Aneinanderreihung bzw. Übereinanderstapeln mehrerer elektrisch in Serie geschalteter Elektroden-Elektrolyt-Einheiten ergibt sich ein Elektrodenstapel, wobei der Elektrolyt sich jeweils zwischen zwei bipolaren Elektroden befindet.

Die Erfindung wird anhand von Fig. näher erläutert. Es zeigen:
- Fig. 1: eine erfindungsgemäße bipolare Elektroden-Elektrolyt-Einheit,
- Fig. 2: eine Sperrschicht mit darauf angebrachten Trägerschichten einer erfindungsgemäßen bipolaren Elektroden-Elektrolyt-Einheit,
- Fig. 3: einen Stapel aus mehreren erfindungsgemäßen Elektroden-Elektrolyt-Einheiten,
- Fig. 4: einen Vertahrensablauf zur Herstellung einer erfindungsgemäßen Elektroden-Elektrolyt-Einheit.,
- Fig. 5: eine Vorrichtung zur Herstellung einer erfindungsgemaßen Elektroden-Elektrolyt-Einheit,
- Fig. 6: Ausführungsbeispiele für die Anordnung der erfindungsgemäßen Elektroden-Elektrolyt-Einheit in elektrochemischen Zellen:
a) Ausführung für einen Energiespeicher (Superkondensator)
b) Ausführung für eine gasbetriebene Stromquelle (Brennstoffzelle).

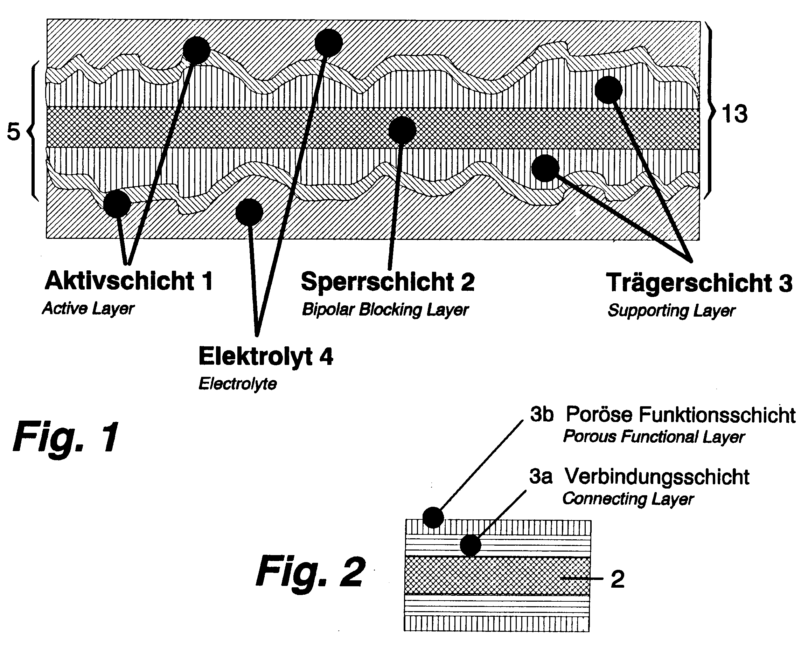

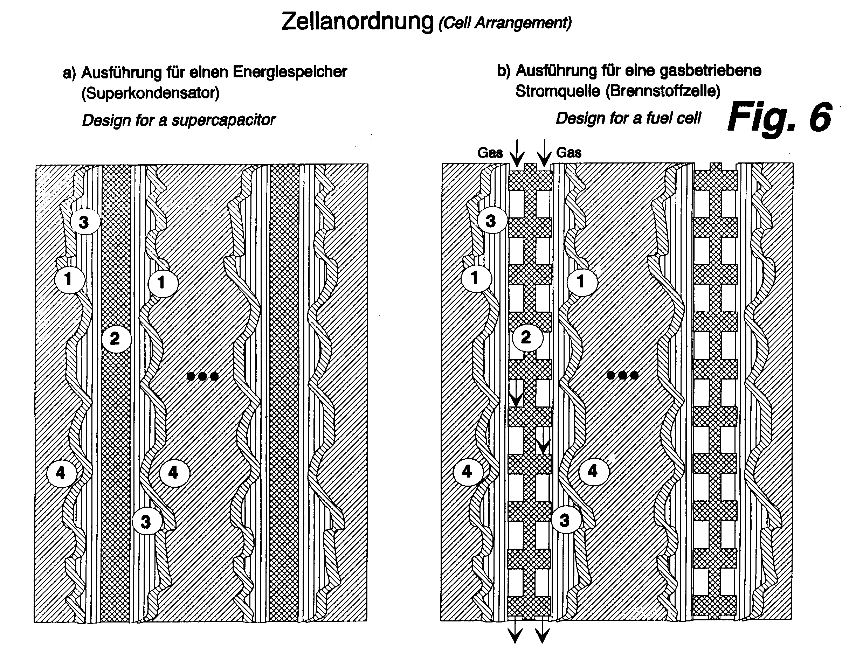

Die Ausführung einer erfindungsgemäßen bipolaren Elektroden-Elektrolyt-Einheit nach Fig. 1 besteht aus einem Laminat ausgewählter Elektronen- und lonenleiter. Die erfinderische Lösung umgreift folgende Teilprobleme:
1. Herstellung einer dünnen, mechanisch stabilen, elektrisch hochleitfähigen, flüssigkeitsundurchlässigen, gasdichten und elektrochemisch langzeitstabilen Sperrschicht 2, die zwischen den aktiven Oberflächen (Trägerschicht 3 mit darauf angebrachter Aktivschicht 1) der bipolaren Einheit liegt. Der Begriff Sperrschicht ist hier nicht im Sinne eines elektrischen Isolators gebraucht, sondern steht allgemein für einen stoffundurchlässigen Körper.
2. Aufbringen einer dünnen, makro-, meso- und/oder mikroporösen, thermisch stabilen Trägerschicht 3 (die Trägerschicht 3 ist in Fig. 1 zweilagig ausgebildet) auf die Sperrschicht, mit dem Ziel der Erzeugung einer grossen spezifischen und geometrischen Oberfläche. Träger- und Sperrschicht sollen einen gut leitenden Verbund bilden.
3. Aufbringen einer porösen, elektrochemisch aktiven Schicht 1 mit geringem Widerstand und hoher Kapazität.
4. Kontaktierung der bipolaren Elektrode 5 mit einem Elektrolyten 4 hoher Leitfähigkeit und je nach Anwendung großer Dielektrizitätszahl und Zersetzungsspannung.
5. Einbringen einer strukturierten Platte (in Fig. 1 nicht gezeigt) zwischen zwei bipolaren Elektroden-Elektrolyt-Einheiten, sofern gasförmige oder flüssige Stoffe an die Aktivschicht zu- oder abgeführt werden sollen. Alternativ kann die Sperrschicht mit Gaskanälen oder einem Strömungsfeld versehen sein (Fig. 6).

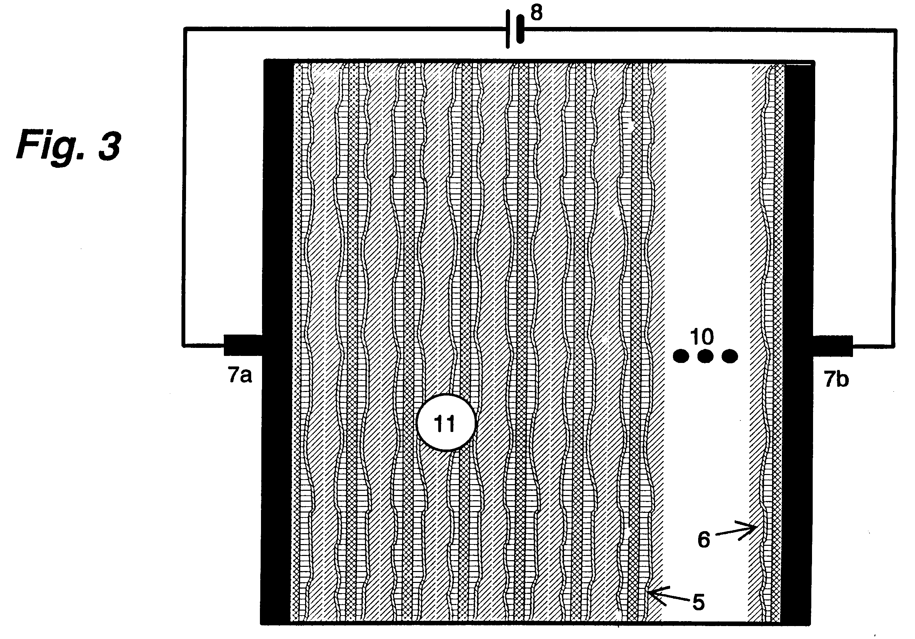

Die Funktionsfähigkeit der elektrochemischen Zelle wird durch die in Fig. 3 dargestellte elektrische Hintereinanderschaltung 10 mehrerer bipolarer Elektroden-Elektrolyt-Einheiten 13 (Fig. 1) in einem Stapel 11 erreicht. Den Abschluß bilden zwei unipolare Abschlußelektroden 6. Die elektrische Kontaktierung wird durch leitende Schichten oder Platten 7a, 7b sichergestellt. Je nach Anwendung kann der Stapel 11 in ein Gehäuse eingebracht werden, das elektrische und mechanische Schutzfunktionen erfüllt. Durch eine äussere Stromquelle 8 kann die Zelle geladen oder durch einen äusseren Verbraucher entladen werden.

Im folgenden werden bevorzugte Ausführungsbeispiele für die einzelnen Schichten der erfindungsgemäßen Elektroden-Elektrolyt-Einheit beschrieben.

### a) Sperrschicht

Aufgabe der Sperrschicht 2 ist es, eine leichte, stabile, leitfähige und stoffundurchlässige Verbindungsfläche zwischen zwei gegenüberliegenden Trägerschichten 3 zu schaffen. Die Sperrschicht besteht aus einem elektrisch leitfähigen Material, beispielsweise Metall (z.B. Nickel, Stahl, Titan, Nichteisenmetall), Kohlenstoff (z.B. Graphit) oder leitfähige Kunststoffe. Sie soll möglichst dünn, ihre Oberfläche kann eben oder rauh sein. Einsetzbar sind Folien, Sinterkörper und Preßkörper, sowohl als Rollenware wie als Plattenmaterial, wie zum Beispiel:
- verdichtete Graphitfolien:
- carbonfaserverstärkter Kohlenstoff;
- mit Harzen versiegelte Kohlenstoffpapiere oder -folien;
- Kunststoffgebundener Kohlenstoff, z.B. mit PTFE oder PVDF oder PP oder PPS-gebundene Graphitflocken und Graphithartfilze;
- Leitgummi oder andere leitfähige Kunststoffe, z.B. Butylkautschuk, rußgefülltes Polypropylen;
- Folien aus Polypyrol, Tolythiophen, Polyacetylen oder einem anderen metallisch leitfähigen Polymer;
- Folien aus Reinnickel oder Nickellegierungen;
- Folien aus Reintitan oder Titanlegierungen, gegebenenfalls platiniert;
- Edelstahlfolien 1,4539, 1,4571, 1,4462, 1,4401 und vergleichbare;
- mit Leitlack überzogenes Metallblech.

Im Fall von Plattenmaterial kann man die Sperrschicht auch als Bipolarplatte bezeichnen. Unter "leitfähigem Kunststoff" wird nachfolgend jede Kombination aus Kohlenstoff und Polymeranteilen verstanden.

Mittels Sputterverfahren können ausreichend dichte Metall- oder Kohleschichten auf die Trägerschicht 3 aufgebracht werden. Die gebräuchlichen Sprüh- und Beschichtungsverfahren nach DIN 8580 (wie zum Beispiel CVD, PVD, Plasma- und Flammspritzen, Galvanisieren) sind ebenfalls zur Erzeugung der Sperrschicht geeignet.

Kohlenstoffmaterialien haben den Vorteil, daß sie
- sehr korrosionsbeständig sind,
- ein geringes spezifisches Gewicht aufweisen,
- sehr gut geeignet sind, mit den für die Trägerschicht vorgesehenen Kunststoff-Anteilen einen stabilen mechanischen Verbund zu bilden,
- eine hohe Überspannung für die Wasserzersetzung aufweisen.

Die Sperrschicht muß das Durchtreten von Fluiden wirksam über eine lange Lebensdauer verhindern, Kohlenstoffmaterialien werden mit geeigneten Harzen auf Furan-, Epoxy-, Acrylat- oder sonstiger polymerer Basis imprägniert. Durch nachfolgende Wärmebehandlung entsteht die stoffdichte, elektrisch gut leitende Sperrschicht.

### b) Trägerschicht

Aufgabe der Trägerschicht 3 ist es, eine strukturierte elektrische Kontaktfläche zwischen der Aktivschicht und der Sperrschicht zu schaffen.
Die Trägerschicht ist eine poröse, dreidimensionale Struktur von großer geometrischer und spezifischer Oberfläche, geringem Widerstand und geringem Gewicht. Bei Kontakt mit einem Elektrolyten wird an an der Trägerschicht eine hohe Doppelschicht- oder Pseudokapazität gemessen. Zwischen Trägerschicht und Sperrschicht und zwischen Trägerschicht und Aktivschicht herrscht guter elektrischer Kontakt. Träger- und Sperrschicht bilden bei erfindungsgemäßer Herstellung einen stabilen mechanischen und elektrischen Verbund.

Die Trägerschicht besteht bevorzugt aus Kohlenstoff oder Metall. Aus Gründen der einfachen technischen Fertigung werden gewebe-, matten- oder folienartige Schichten vorgezogen.
Beispiele sind:
- Kohlenstoffaserpapiere,
- Kohlenstoffaserfolien und -matten,
- durch Pyrolyse oder Dehydratisierung organischer Stoffe erzeugter Kohlenstoff,
- Kohlenstoff-Polymer-Folien oder sonstiger Kunststoff gebundender Kohlenstoff,
- Glaskohlenstoff,
- Nickelfilze mit 50% Faser- und 50% Pulveranteil,
- Nickelschäume.

Die Trägerschicht kann prinzipiell auch durch den Auftrag pulverförmiger Edukte oder suspendierter Partikel (z.B. aus Kohlenstoff, Metall, leitfähige Polymere) mit einem Sprüh-, Sputter-, Streich-, Tauch-, Sinter-, Preß-, Siebdruckverfahren etc. entstehen.

Der räumliche Aufbau der Trägerschicht bietet den Partikeln der Aktivschicht einen hochoberflächigen Haftgrund, so daß Aktivmaterial eingespart und Elektroden mit spezifischen Kapazitäten bis zu 800 Farad/Gramm Metalloxid erhalten werden.

Für Trägerschichten aus Kohlenstoff kommen Aktivkohlen, Kokse, Ruße, Kohlenstoffschäume, Pyrolyseprodukte pflanzlicher und petrochemischer Herkunft in Frage. Grundsätzlich muß ihre spezifische Oberfläche hoch und ihr elektrischer Widerstand gering sein.

Um die Benetzung der Trägerschicht mit dem Elektrolyten zu verbessern, kann die Trägeroberfläche hydrophilisiert werden. Dazu eignet sich die Wärmebehandlung an Luft bei ca. 150 bis 1200°C, wobei sich unter anderem Carboxylgruppen bilden, oder die elektrochemische Oxidation, indem man die Trägerschicht mit einem anodischen Strom belastet.

Zur besseren Haftvermittlung zwischen Sperrschicht und Trägerschicht kann der nachfolgend beschriebene bifunktionale Aufbau dienen.

### c) Bifunktionale Trägerschicht

Die Trägerschicht 3 muß guten elektrischen Kontakt zur Sperrschicht 2 und hohe elektrische Leitfähigkeit garantieren. Daher kann es erforderlich sein, sie aus zwei Lagen aufzubauen (Fig. 2):
1. Die Verbindungsschicht 3a dient der stabilen mechanischen und elektrischen Ankopplung der Trägerschicht an die Sperrschicht. Geeignete Materialien hierfür sind:
   - dünne Graphitfolien oder Graphitfolien mit Metalleinlage,
   - verdichtete Graphitflocken,
   - Glaskohlenstoff,
   - Metallnetze oder -filze,
   - elektrisch leitende Klebe- oder Lackschichten,
   - durch Pyrolyse organischer Verbindungen entstandener Kohlenstoff.
   Die Aufbringung kann durch Druck und/oder Wärme erfolgen, speziell auch durch einen Schweiß- oder Sintervorgang. Ein Beispiel ist die Garbonisierung geeigneter Polymervorstufen, wobei Träger- und Sperrschicht durch eine dünne Kohlenstoffschicht verbunden werden.
2. Die poröse Funktionsschicht 3b wird ähnlich unter Ziff. 1 auf die Verbindungsschicht 3a aufgebracht. Dabei kann die Funktionsschicht vollständig in die Verbindungsschicht eindringen und mit dieser eine Einheit bilden. Es kommen die unter b) beschriebenen Werkstoffe zum Einsatz. Ein Beispiel dafür ist, daß Kohlenstoffaserkörper in eine Folie aus leitfähigem Kunststoff oder Graphit eingedrückt werden.

Ein weiteres Beispiel ist, daß Kohlenstoffaserkörper mit Hilfe eines Harzes oder Klebers auf eine Graphitfolie aufgebracht und einer Wärmebehandlung unterzogen werden. Der Kleber kann gleichzeitig zur Imprägnierung der Graphitfolie dienen.

In Fig. 2 sind die Schichten 3a,3b mit ebener Oberfläche dargestellt, während in Fig. 1 die einlagige Trägerschicht 3 eine komplexe dreidimensionale Struktur aufweist. jedoch könnte umgekehrt auch die einlagige Trägerschicht 3 nach Fig. 1 eben ausgebildet sein, und die Trägerschichten 3a,3b nach Fig. 3 eine komplexe dreidimensionale Struktur aufweisen. Die verschiedenen Kohlenstoffmaterialien für die Trägerschicht gewährleisten die räumliche Struktur von großer spezifischer und geometrischer Oberfläche, mit der gegenüber herkömmlichen Materialien wesentlich höhere Leistungsdichten erreicht werden können.

### d) Aktivschicht

Aufgabe der Aktivschicht 1 ist es, auf der Oberfläche der Trägerschicht statistisch verteilte Reaktionszentren zu schaffen. An der Aktivschicht laufen elektrochemische Reaktionen ab, die eine hohe Grenzflächenkapazität erzeugen und große Ströme fließen lassen. Die Aktivschicht kann die Trägerschicht vollständig oder teilweise bedecken oder in Form von Keimen aufgebracht sein.

Die Aktivschicht besteht vorzugsweise aus Metalloxiden nach der **EP 0 622 815 B1** oder Perowskiten nach **DE 196 40 926.8,** die in einem separaten Arbeitsschritt auf die Trägerschicht aufgebracht werden. Im ersten Fall handelt es sich um redoxaktive, unterstöchiometrische Metalloxidhydrate mit definiertem Wassergehalt, wie z.B. RuO₂ · xH₂O und IrO₂ · xH₂O Die Energiespeicherfähigkeit beruht auf dem reversiblen Wechsel der Oxidationsstufen III und IV. Das Metalloxid ist elektronisch leitend und tauscht mit dem Elektrolyten Protonen aus. Das Metalloxid ist damit als Niedertemperatur-Protonenleiter aufzufassen. Es wird beispielsweise durch einen Sol-Gel-Prozeß hergestellt, bei dem ein Rutheniumsalz mit Akalilauge behandelt wird. Durch die nachfolgende Trocknung wird ein definierter Wassergehalt des Metalloxidhydrat-Pulvers eingestellt, der die elektrochemischen Eigenschaften bestimmt. Ideale Trockentemperaturen liegen zwischen 80 und 325°C.

Die Beschichtung kann mit Sprüh-, Streich-, Tauch-, Sinter- oder Siebdruckverfahren erfolgen. Zur Haftvermittlung können Polymere oder anorganische oder organische Binder zugesetzt werden. Geeignete Binder sind Nafion®-Lösung, Polytetrafluorethylen, Dicköl, anorganische oder organische Verbindungen des Titans, Aluminiums oder Siliciums. Dicköl bezeichnet ein Harz-Lösungsmittel-Gemisch, das Nitrocellulose, Butanol u.a. enthält und als Grundstoff von Lacken oder Siebdruckpasten Verwendung findet.

Die Aktivschicht kann auch aus einer Mischung oder einem Laminat von Metalloxiden mit den unter b) näher bezeichneten Kohlenstoffkörpern bestehen. Weitere Beispiele sind: auf Aktivkohle oder Leitgraphit abgeschiedene Metalloxide, wobei sich das Metalloxid strukturchemisch auf oder in den Kohlepartikeln befinden kann. Geeignete Kohlematerialien sind z.B. Aktivkohle (Chemviron ®), graphitierter Ruß (Vulean XC-72®), Hochleitfähigkeitsruß (Printex XE2®).

### e1) Elektrolyt

Der Elektrolyt 4 steht bevorzugt in einem innigen mechanischen und elektrischen Kontakt zur aktiven Elektrodenschicht aus Trägerschicht 3 mit darauf angeordneter Aktivschicht 1. Die Elektrolytschicht enthält einen Ionenleiter mit hoher elektrischer Leitfähigkeit. Mögliche Ausführungsformen sind:
(a) wäßrige Lösungen, verdünnte Säuren oder organische Laugen, Lösungsmittel mit Leitsalzen,
(b) fixierte Elektrolyte, wobei die unter (a) genannten Stoffe durch Kapillarkräfte in einem saugfähigen Material (Matrix) festgehalten werden; letztere können textile Gewebe oder Folien sein, wie zum Beispiel:
   - Poröses Polytetrafluorethylen und dessen sulfonierte Derivate,
   - Vliesstoffe oder Folien aus Polypropylen, Polyamid, Polyvinylchlorid, Polyethylenoxid, PVDF, Polystyrolsulfonsäuren,
   - Zirkondioxidgewebe,
   - Polyethylen, z.B. mit Siliciumdioxid verstärkt,
   - Phenolharze, z.B. auf Polyesterträgern,
   - Phenol-Formaldehydharze, z.B. auf Cellulosepapier,
   - Glasfasergewebe.
(c) festgelegte Elektrolyte, wobei die unter (a) genannten Stoffe mit anorganischen oder organischen Bindern zu einer streichfähigen Paste verarbeitet werden; geeignete Binder sind Aluminiumoxid, Siliciumdioxid oder Fluorpolymere. Beispiele sind: 3 bis 10 mol/l Schwefelsäure + SiO₂, NaHSO₄-Lösung + SiO₂, KOH + Al₂O₃ oder MgO oder SnO₂.
(d) organische Festelektrolyte wie Ionen- oder Protonenaustauschermembranen, beispielsweise Nafion®, sulfonierte Polyimide oder vergleichbare.
e) sogenannte Supersäuren, z.B. "SO₄/ZrO₂", Heteropolysäuren von Wolfram oder Molybdän, Fluorsulfonsäure/SbF₅, Natrium-Aluminium-Oxide.

### e2) Elektrolytzusätze können sein:

Kaliumfluorid, Bromide, Harnstoff oder Lithiumsalze, um die protonenleitenden Eigenschaften der Aktivschicht zu verbessern; Palladiumsalze, um Adsorptionsplätze für Wasserstoff zu schaffen oder als Rekombinationskatalysator.

### f) Bipolare Elektroden-Einheit

Die Elektroden-Einheit 5 ist ein elektrisch leitfähiger Verbund der mechanisch stabilen, temperaturbeständigen und fluiddichten Sperrschicht (Ausführung z.B. wie unter Buchstabe a) beschrieben), die beidseitig mit einer porösen Trägerschicht (siehe Buchstabe b)) und einer darauf liegenden elektrochemisch aktiven Schicht (siehe Buchstabe c)) beschichtet ist.

### g) Bipolare Elektroden-Elektrolyt-Einheit

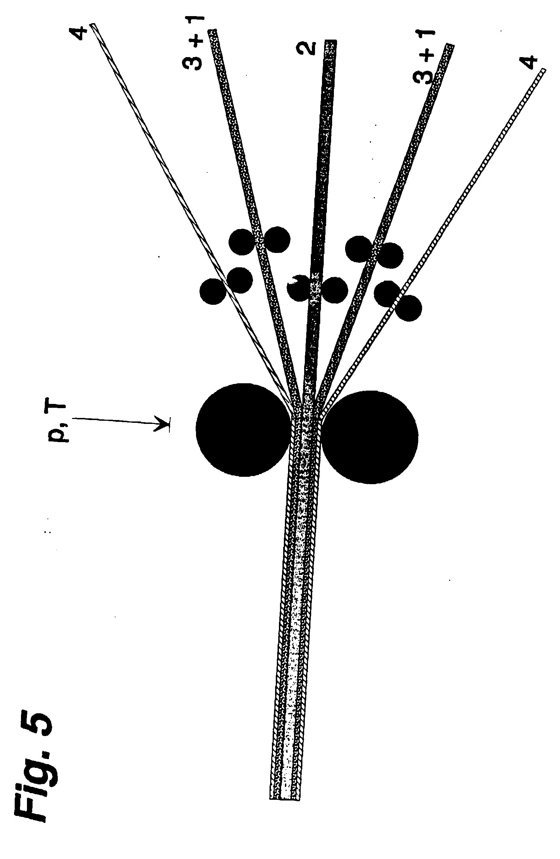

Die Elektroden-Elektrolyt-Einheit (im folgenden auch mit EEE abgekürzt) 13 (Fig. 1) ist ein elektrisch leitfähiger Verbund oder eine Hintereinanderschaltung der bipolaren Elektrode 5 mit dem Elektrolyten 4. Die EEE soll insgesamt möglichst dünn und leicht sein, um hohe elektrische Energie und Leistung je Volumen und Masse zu erzielen. Zwischen den EEE können sich gasdurchlässige Separatoren befinden, sofern ein Gas- und Stoffaustausch mit der Aktiv-Trägerschicht (Trägerschicht 3 mit darauf angeordneter Aktivschicht 1), dem Elektrolytraum 4 und der äußeren Umgebung der EEE erwünscht ist. Fig. 5 zeigt schematisch ein Verfahren, wie durch die Einwirkung von Druck und eventuell Temperatur aus Sperrschicht 2 aktiv beschichteter Trägerschicht 3+1 und Elektrolytschicht der EEE-Verbund herstellt wird.

### Beispiele

### Beispiel 1 (EEE)

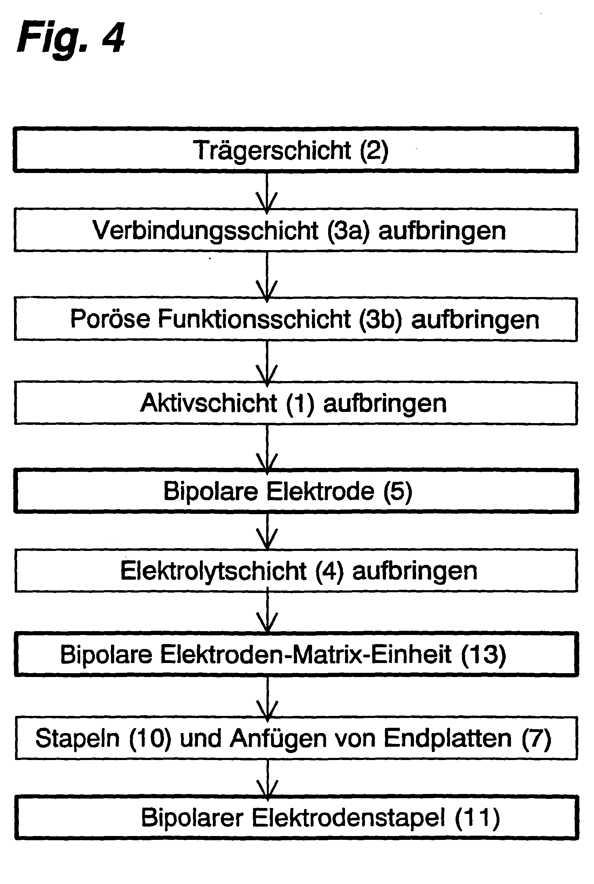

Die Sperrschicht 2 ist eine Stahlfolie der Dicke 50 µm oder eine metallverstärkte Graphitfolie. Als zweilagige Trägerschicht werden darauf Graphitfolie oder verdichtete Graphitflocken 3a (Fig. 2) und Kohlenstoffasergewebe oder - papier 3b aufgewalzt. Dabei dient die Graphitfolie als Haftvermittler, die Kohlenstoffasern als hochoberflächiger Träger für die Aktivschicht. Durch das Auftragverfahren wird der Faserkörper 3b in die weiche Verbindungsschicht 3a eingedrückt. Die Haftung der Schicht 3a auf 2 kann durch Auftrag eines leitfähigen Klebers oder Nafon®-Lösung noch verbessert werden.
Die Aktivschicht 1 wird in einem Folgeschritt auf die Trägerschicht 3 aufgebracht. Der angrenzende Elektrolyt 4 ist ein schwefelsäuregetränktes Zirkondioxidgewebe oder eine Protonenaustauschermembran.
Eine Variante des Herstellprozesses eines bipolaren Elektrodenstapels 11 ist in Fig. 4 dargestellt. Dabei entsprechen die angegebenen Ziffern den Bezugsziffern in den Fig. 1 bis 3. Geeignete Materialien für Endplatten, Dichtungen, Elektrolyte und Separatoren sind z.B. in DE 43 13 474 beschrieben.

### Beispiel 2 (EEE)

Die Sperrschicht 2 ist eine dünne Folie aus imprägnierter Graphitfolie, kunststoffgebundenem Kohlenstoff, Titan, Nickel oder Stahl. Als Trägerschicht 3 wird ein Kohlenstoffaserpapier aufgebracht. Die Aktivschicht besteht aus Metalloxid, das durch einen Siebdruck- oder Sintervorgang aufgebracht wird. Beschichtungstechniken sind z.B. in der DE 43 13 474 beschrieben. Der Elektrolyt ist silcastabilisiertes Polyethylen, Zirkodioxidgewebe oder Polytetrafluorethylen-Folie, die mit Schwefelsäure durchtränkt sind.

### Beispiel 3 (Trägerschicht)

Die Trägerschicht besteht im einfachsten Fall aus Kohlenstoffaserpapier. Ein zweilagiger Aufbau wird realisiert als ein Verbund von Kohlenstoffasern mit Graphitflocken und gegebenenfalls Anteilen von Polymeren. Die Kohlenstoffasern liegen als Folien, Gewebe oder Vliese von Pechpapieren oder PAN-Fasern vor. Pechfasern weisen eine besonders günstige Langzeitstabilität gegenüber Schwefelsäure auch unter oxidierenden Bedingungen auf. PAN-Fasern zeigen eine ausgeprägtere Anisotropie der Leitfähigkeit.

### Beispiel 4 (Haftvermittlung durch Kleben)

Durch die feste Verbindung von Trägerschicht und Sperrschicht mittels Kleben, Walzen oder Pressen wird neben hoher Stabilität ein sicherer und guter elektrischer Kontakt zwischen den beiden Schichten erreicht. Insbesondere werden hohe Übergangswiderstände, die sich nachteilig auf den Innenwiderstand der Zelle auswirken, vermieden.

Auf eine metallische oder graphitische Sperrschicht 2 wird Kohlefasergewebe durch einen Klebevorgang aufgebracht. Die Kohlenstoffaser 3b wird mit einer Suspension eines Klebers oder eines Polymers bestrichen oder getränkt, auf den Träger gebracht und sodann die Haftschicht 3a durch einen chemischen, thermischen oder pyrolytischen Schritt hergestellt. Geeignete Klebstoffe sind Leitlacke, Eporyharze, Silicone, Phenolharze, Polyacrylntril-Harze oder Nafion®-Lösung. Durch die Wärmebehandlung entstehen gut leitfähige Haftschichten zwischen Sperr- und Trägerschicht.

### Beispiel 5 (Trägerschicht)

Auf eine dünne Graphit- oder Nickel-, Stahl- oder Titanfolie 2 wird eine mit einem Metallsalz getränkte Kohlenstoffaser 3b aufgebracht. Das Metallsalz kann Ruthenium(III)-chlorid, Hexachloroiridiumsäure oder Hexachloroplatinsäure sein. Die Verbindungsschicht 3a entsteht, indem das Metallsalz bei etwa 400^{o}C thermisch zersetzt wird.

### Beispiel 6 (Trägerschicht mit Aktivschicht)

Organische Körper, textile Gewebe oder Flore (z.B. PAN, PMMA, PS, PPS, PVDF, PP, Phenolharzen oder anderen Polymeren) oder Zucker-, Cellulose- oder proteinhaltige Produkte (z.B. Saccharose, Milch, Lignin) werden auf einem Kohle- oder Metallträger pyrolysiert. Zur Haftvermittlung kann der organische Körper vorher aufgeklebt werden. Die Pyrolyse kann sowohl thermisch als auch unter Einwirkung von Schwefelsäure oder Salpetersäure (Dehydratisierung) stattfinden. Das Metalloxid wird nachträglich aufgebracht oder der organische Körper vor der Pyrolyse mit dem Metalloxid durchsetzt.

Je nach Vorstufe und Temperatur entstehen mehr rußähnliche oder graphitische Kohlenstoffschichten. PAN wird üblicherweise unter Luft- oder geregeltem Sauerstoffzutritt carbonisiert. Unter Luftausschluß oder in einer reduzierenden Atmosphäre bilden sich bei der nachfolgenden Wärmebehandlung bei ca. 800 bis 1800°C (z.B. bei 900°C) kettenartige Kohlenstoffstrukturen und Heteroatome werden beseitigt. Beim Graphitieren oberhalb 1800-2000°C entstehen geordnete Kohlenstoffstrukturen und damit Produkte von ausgezeichneter elektrischer Leitfähigkeit.

### Beispiel 7 (Sperrschicht, Bipolarplatte)

Aufgrund seiner natürlichen Porosität wird die Eignung von Kohlenstoff für die Sperrschicht erst durch eine entsprechende Verdichtung erreicht. Ein besonders geeignete Ausführungsform enthält Anteile von Polymeren. Graphitflocken oder sonstige Kohleteilchen werden mit Polymeren (wie z.B. PVDF, PSU, PP, PE, PTFE, PEEK, PPS, Phenolharzen, PMMA, PS, Polycarbonat) vermischt und zu einer dünnen Folie verarbeitet. Dies kann unter Wärmeeinwirkung in einem Heißpreß- oder Walzvorgang erfolgen. Das erfindungsgemässe Produkt ist eine Folie aus kunststoffgebundenem Kohlenstoff, kurz "Leitfähiger Kunststoff".

### Beispiel 8 (bipolare Elektrode)

Die bipolare Elektrode wird erzeugt, indem eine Graphitfolie (vgl. Beispiel 9) zwischen zwei Kohlenstoffaservliese gepreßt wird. Durch nachfolgende Wärmeinwirkung entsteht ein gut haftender Verbund von hoher elektrischer Leitfähigkeit.
Eine Variante des Prozesses besteht darin, daß Graphit und Kohlenstoffasermaterial mit Hilfe eines Polymer-Gemisches (vgl. Beispiel 7) zusammengefügt werden. Durch thermische Zersetzung des Polymers entsteht eine haftvermittelnde Verbindungsschicht zwischen Graphitfolie und Kohlenstoffaserschicht. Bei einer weiteren Variante wird ein Aktivkohle-Polymer-Gemisch beidseitig auf die Sperrschicht aufgebracht und thermisch behandelt, carbonisiert und/oder graphitiert. Sperr- und Trägerschicht bilden eine nur schwer trennbare Verbundenheit.

### Beispiel 9 (bipolare Elektrode)

Graphitflocken oder sonstige Kohlepartikel werden mit einem Polymeren (vgl. Beispiel 7) vermischt und mit einem Kohlefaserpapier, -vlies oder -gewebe verpreßt. Typische Verfahrensparameter des Heißpreßvorgangs sind Drücke von 100 - 1000 kg/cm² bei Temperaturen von 100 - 500°C. Diese Trägerschicht wird auf die Sperrschicht (vgl. Beispiele 10,11) aufgesintert, aufgeklebt, heißgepreßt.
Die Herstellung der Elektrode im Heißpreßverfahren ist auch in einem Arbeitsschritt möglich, indem die Kohle- und Polymeranteile auf das Kohlepapier aufgestrichen und sodann diese beidseitig auf die Sperrschicht aufgelegt und verpreßt wird.
Durch nachfolgende Prozesse kann die Elektrodenoberfläche modifiziert werden. Sinnvoll ist eine Hydrophilisierung, um einen guten Elektrolytkontakt zu gewährleisten. Dies gelingt durch Wärmebehandlung in oxidierender Atmosphäre, durch Ätzen oder elektrochemisches Aufrauhen.

### Beispiel 10 (Sperrschicht, Bipolarplatte)

Die Sperrschicht muß fluiddicht sein. Wird Graphit eingesetzt, muß er vorher porendicht gemacht werden. Zur Imprägnierung eignen sich vorzugsweise Furanharze, Epoxyharze, Acrylharze oder PTFE. Durch eine nachfolgende Wärmebehandlung (Carbonisierung) entstehen Produkte von hoher elektrischer Leitfähigkeit. Damit werden die elektrochemischen Vorteile des Graphits für bipolare Elektroden erschlossen.

### Beispiel 11 (Sperrschicht)

Die als Bipolarplatte gewalzte Sperrschicht ist eine mechanisch oder chemisch aufgerauhte Kohlenstoffplatte, z.B. aus Graphit oder Glaskohlenstoff. Als Ätzmittel eignet sich Salpetersäure, Schwefelsäure/Kaliumpermanganat oder ein anderes oxidierendes Agens. Mit hohen anodischen Spannungen ist auch eine elektrochemische Aufrauhung möglich. Vorteil der Ätzung ist eine nano- und mikroporöse Strukturierung der Sperrschicht, so daß sie eine größere geometrische und spezifische Oberfläche und besseres Haftvermögen für die Trägerschicht aufweist.

### Beispiel 12 (fixierter Elektrolyt)

3 molare Schwefelsäure wird durch Kapillarkräfte in einem mikroporösen Separator aus Polyethylen fixiert. Typischerweise besteht der Separator aus 24 % Polyethylen, 12 % Öl, 61 % Siliciumdioxid und 3 % Ruß.
Die Dicke beträgt weniger als 300 µm, die Druckstabilität ist gut. Schwefelsäurebeständige Dichtflächen werden mit Hilfe von Klebstoffen auf der Basis von Acrylaten und Fluorsiliconen realisiert.

### Beispiel 13 (Elektrolytpasten)

Der Elektrolyt 4 wird auf die bipolare Elektrode in Form einer Paste aus Schwefelsäure oder Kalilauge und Aluminiumoxid aufgestrichen.

### Beispiel 14 (Aktivschicht, Metalloxid)

Durch einen Sol-Gel-Prozess werden aus Rutheniumverbindungen und Alkalilauge Rutheniumdioxidhydrate erhalten. Der pH-Wert der Fällung beträgt 7 bis 14. Je nach Wassergehalt und Sauerstoffdefekt-Stöchiometrie liegen protonenleitfähige Produkte von ausgezeichneter elektrischer Leitfähigkeit und hoher massenbezogener Kapazität (bis 800 F/g) vor. Der gewünschte Wassergehalt wird durch eine Wärmebehandlung bei 80°C bis 325°C eingestellt. Geeignete Ausgangsstufen sind Rutheniumchlorid, Rutheniumnitrosylnitrat, Ruthenate (aus Rutheniummetall und Peroxodisulfat oder Rutheniumalkohole). Sie werden in salzsaurer Lösung vorgelegt. Statt Ruthenium können ebenso Iridiumverbindungen eingesetzt werden. Je nach Anforderungen werden Hilfsstoffe wie fluoriddotiertes Zinndioxid, Tantaloxid, Manganoxid, Bleioxid u.a. zugemischt. Die spezifische Oberfläche des Pulvers beträgt über 100 m²/g. Beim Füllen mit verdünnter Lauge erhält man besonders hohe spezifische Oberfläche. Das Pulver enthält ca. 1 % Natrium und weniger als 300 ppm Chlor. Durch Mahlen und Sieben wird eine Korngröße von unter 50 µm ausgewählt. Ausdrücklich werden Verbindungen der Platingruppenmetalle als geeignete Elektrokatalysatoren genannt. Eine kostengünstige Weiterentwicklung sind Perowskite, die Ruthenium enthalten können.

### Beispiel 15 (Aktivschicht)

100 g des Metalloxids (Beispiel 14) werden mit 40 g 5 %iger Nafionlösung oder Dicköl und 150 g Wasser intensiv vermischt, z.B. in einer Kugelmühle. Die erhaltene Paste wird auf die bipolare Elektrode aufgepinselt, aufgespachtelt oder im Siebdruck aufgebracht. Zur besseren Benetzung kann die Elektrode vorher mit einer Alkohl-Wasser-Mischung befeuchtet werden. Die beschichtete Elektrode ist nach Trocknung an Luft einsatzfähig.

### Beispiel 16 (Siebdruckpaste)

Die Siebdruckpaste soll stabil gegen Säuren und Oxidation sein und gut auf dem Träger haften. Ca. 43 % Metalloxid werden mit ca. 3 % Polymer (PTFE, Nafion, PI, PE, Eporyharz, PSU, PEEK etc.) und ca. 54 % Lösungsmittel (z.B. PVP, Sulfolan, NMT, Alkohole) vermischt.
Die Verdunstungszahl soll so hoch sein, daß sich die Paste zügig verarbeiten läßt, eine nachfolgende Wärmebehandlung der Elektrode aber entfallen kann oder 80°-100°C nicht übersteigt.

### Beispiel 17 (Nachbehandlung)

Die Haftung der Metalloxidschicht wird durch Hydrophilisierung der Trägerschicht verbessert (vgl. b).
Alternativ kann man wäßrige 2 %-ige Nafionlösung auf die frisch aufgebrachte Aktivschicht aufsprühen und an Luft eintrocknen. Dadurch wird die Aktivschicht auf der Elektrode fixiert.

### Beispiel 18 (Bifunktionale Anwendung)

Die erfindungsgemäße Anwendung der EEE sind Kurzzeit-Energiespeicher (Superkondensatoren). Bringt man in die bipolare Elektrode Gaszuführungen oder ein Strömungsfeld ein, kann man damit gasbetriebene Stromquellen (Brennstoffzellen) realisieren (vgl. Fig. 6). Die poröse Trägerschicht 3 ist darüberhinaus in der Lage, die Gasverteilung zu übernehmen. Verfahrenstechnische Maßnahmen zur Abfuhr von Produktwasser, Befeuchtung und Beheizung/Kühlung sind nicht Gegenstand dieser Erfindung, jedoch insofern damit verknüpft, als der fixierte Elektrolyt und die Trägerschicht wichtige Speicher-, Transport- und Verteilungsaufgaben übernehmen.

### Beispiel 19 (Sperrschicht)

Korrosionsempfindliche Träger, wie z.B. Stahl, können mit einem Leitlack durch Ansprühen, Tauchen, Pinseln oder Streichen beschichtet werden. Dadurch wird Langzeitstabilität in aggressiven Medien erreicht. Eine typische Zusammensetzung eines Leitlacks ist: Leitfähige Partikel (Kohlenstoff, Leitgraphit, Metallpartikel wie Ag/Cu, Pt) in einer Elastomermatrix (Epoxy, Silicon, Fluorsilicon) und ein Lösungsmittel. Durch den Leitlack wird ein stabiler Verbund zwischen Trägerschicht und Sperrschicht erreicht.

## Patentansprüche

1. Bipolare Elektroden-Elektrolyt-Einheit (13) für eine elektrochemische Zelle, wobei die Elektrode eine Sperrschicht (2) sowie mindestens zwei Trägerschichten (3) und mindestens zwei Aktivschichten (1) umfaßt, und
- die Aktivschichten (1) aus einem elektroaktiven Material mit geringem Widerstand und hoher Kapazität bestehen,
- die Sperrschicht (2) elektrisch leitend und stoffundurchlässig ist und aus
- verdichtetem und/oder imprägniertem Kohlenstoff oder
- kunststoffgebundenem Kohlenstoff oder
- kohlenstoffbeschichtetem Metallblech besteht,
- die sich jeweils zwischen Sperrschicht (2) und einer Aktivschicht (1) befindlichen Trägerschichten (3) eine elektrisch leitende, poröse, dreidimensionale Struktur von großer spezifischer und geometrischer Oberfläche bilden, die Kohlenstoffaserpapiere, Kohlenstoffaserfolien, Kohlenstoffasermatten, Kohlenstoffasergewebe, verdichtete Graphitflocken und Kohlenstoffasern, leitfähigen Kunststoff oder durch Pyrolyse oder Dehydratisierung organischer Stoffe erzeugten Kohlenstoff enthält,
- Sperrschicht (2) und Trägerschicht (3) einen durch Kleben, Walzen oder Pressen erzeugten stabilen mechanischen und elektrischen Verbund bilden,
- der Elektrolyt (4) gut leitfähig ist.

2. Bipolare Einheit nach Anspruch 1, dadurch gekennzeichnet, daß die Aktivschicht (1) aus einem Perowskitmaterial besteht.

3. Bipolare Einheit nach Anspruch 1, dadurch gekennzeichnet, daß die Aktivschichten (1) aus einem redoxaktiven, unterstöchiometrischen Metalloxidhydrat mit definiertem Wassergehalt bestehen.

4. Bipolare Einheit nach Anspruch 3, dadurch gekennzeichnet, daß das Metalloxidhydrat ein protonenleitendes Platinmetalloxidhydrat enthält, das aus Platinmetallverbindungen durch Zugabe verdünnter Alkalilaugen und nachfolgender Trocknung bei unter 325 °C hergestellt ist, und Zuschlagstoffe von Zinn- Tantal-, Mangan- oder Bleioxiden enthalten kann.

5. Bipolare Einheit nach Anspruch 3 oder 4, dadurch gekennzeichnet, daß das Metalloxidhydrat zu einer siebdrucktaugliche Paste verarbeitet ist, die organische Lösungsmittel (wie Dicköl, PVP, Alkohole) und Polymere (wie Nafion®, PTFE, PSU, PP) enthält und eine hohe Verdunstungszahl aufweist.

6. Bipolare Einheit nach einem der vorangehenden Ansprüche, dadurch gekennzeichnet, daß der kunststoffgebundene Kohlenstoff der Sperrschicht (2) eine Mischung oder Verbindung aus Kohlenstoff und Polymeren wie PVDF, PSU, PP, PE, PTFE, PEEK, PPS, Phenolharze, PMMA, PS, Polycarbonat ist.

7. Bipolare Einheit nach einem der vorangehenden Ansprüche, dadurch gekennzeichnet, daß die Trägerschicht (3) aus einer haftvermittelnden Verbindungsschicht (3a) und einer hochoberflächigen Funktionsschicht (3b) besteht.

8. Bipolare Einheit nach einem der vorangehenden Ansprüche, dadurch gekennzeichnet, daß die Trägerschicht (3) von der Aktivschicht (1) vollständig, unvollständig, porös oder in Form von Keimen bedeckt ist.

9. Bipolare Einheit nach einem der vorangehenden Ansprüche, dadurch gekennzeichnet, daß die Aktivschicht (1) auf die Trägerschicht (3) aufgebracht ist unter Verwendung von anorganischen oder organischen Bindern wie Nafion®-Lösung, Polytetrafluorethylen, Dicköl, metallorganischen Verbindungen des Titans, Aluminiums oder Siliciums.

10. Bipolare Einheit nach einem der vorangehenden Ansprüche, dadurch gekennzeichnet, daß die Aktivschicht (1) mit der Trägerschicht (3) eine mechanische und elektrische Einheit bilden.

11. Bipolare Einheit nach einem der vorangehenden Ansprüche, dadurch gekennzeichnet, daß der Elektrolyt (4) wäßrige Lösungen, verdünnte Säuren oder Laugen, Supersäuren oder organische Lösungsmittel mit Leitsalzen enthält.

12. Bipolare Einheit nach Anspruch 11, dadurch gekennzeichnet, daß die Flüssigkeit in der Elektrolytschicht (4) durch Kapillarkräfte in einem saugfähigen Material von Zirkondioxid, porösem Polytetrafluorethylen, Polypropylen, Polyamid oder einem anderen Polymeren festgehalten wird.

13. Bipolare Einheit nach einem der vorangehenden Ansprüche, dadurch gekennzeichnet, daß der Elektrolyt (4) aus einer Paste von anorganischen Säuren oder Laugen und Aluminiumoxid, Siliciumdioxid oder Fluorpolymeren besteht.

14. Bipolare Einheit nach einem der vorangehenden Ansprüche, dadurch gekennzeichnet, daß der Elektrolyt (4) eine Ionenaustauschermembran oder ein ionenleitfähiger Kunststoff ist.

15. Bipolare Einheit nach einem der vorangehenden Ansprüche, dadurch gekennzeichnet, daß die Sperrschicht (2) mit Gaskanälen oder einem Strömungsfeld versehen ist.

16. Bipolarer Elektrodenstapel, dadurch gekennzeichnet, daß bipolare Elektroden-Elektrolyt-Einheiten (13) nach einem der Ansprüche 1 bis 15 elektrisch in Serie geschaltet sind.

17. Bipolarer Elektrodenstapel, nach Anspruch 16, dadurch gekennzeichnet, daß sich zwischen zwei angrenzenden bipolaren Elektroden-Elektrolyt-Einheiten (13) eine stoffdurchlässige strukturierte Schicht befindet.

18. Verwendung einer bipolaren Elektroden-Elektrolyt-Einheit in elektrochemischen Zellen wie Doppelschichtkondensatoren, Brennstoffzellen, Elektrolyseuren, Gassensoren.

19. Elektroden-Elektrolyt-Einheit in bifunktional betriebenen elektrochemischen Zellen, die abwechselnd als Elektrolyseur und Brennstoffzelle arbeiten.
